# EUROPÄISCHE PATENTSCHRIFT

(11) **EP 1 862 336 B1**
(45) Veröffentlichungstag und Bekanntmachung des Hinweises auf die Patenterteilung: **25.01.2012**
(21) Anmeldenummer: 07106516.3
(22) Anmeldetag: 19.04.2007
(51) Int. Cl.: B60G 13/00, B60G 15/06, F16F 9/54

(54) **Stützlager für ein Federbein oder dgl. eines Fahrzeugs**
Support bearing for a suspension strut or similar of a vehicle
Pièce de maintien pour une jambe de force ou analogue d'un véhicule

(30) Priorität: 03.06.2006 DE 102006026093
(43) Veröffentlichungstag der Anmeldung: 05.12.2007
(73) Patentinhaber: Bayerische Motoren Werke Aktiengesellschaft, 80809 München (DE)
(72) Erfinder: Strobl, Hubert, 86343 Königsbrunn (DE); Pfaffenzeller, Peter, 81543 München (DE); Schopp, Stefan, 80935 München (DE); Wilhelm, Wolfgang, 80637 München (DE)

(56) Entgegenhaltungen:
- EP-A- 1 393 936
- EP-A- 1 640 192
- WO-A-03/066300
- DE-A1- 19 905 693
- DE-C1- 3 223 752
- FR-A1- 2 695 974

## Beschreibung

Die Erfindung betrifft ein Karosserieflansch eines Fahrzeugs mit einem darin befestigten Federbeinstützlager , indem ein oberer sowie ein unterer jeweils in einem Elastomermaterial ausgeführter Abschnitt von oben bzw. von unten mittels einer lösbaren Schraubverbindung in der Umgebung einer Aussparung gegen den Karosserieflansch gepresst werden, wie es bspw. bei Personenkraftwagen weit verbreitetet ist, wozu beispielshalber auf die DE 101 05 458 A1 verwiesen wird. Weiteren bekannten Stand der Technik bildet die DE 103 01 569 A1, die ein Dämpferlager zeigt, das aus unterschiedlichen Materialen bestehende Lagerelemente aufweist, um in radialer und axialer Richtung jeweils bestimmte Verformungswege mit unterschiedlich definierter Anlaufsteifigkeit realisieren zu können.

Ferner ist aus der zur Bildung des Oberbegriffs des Anspruchs 1 herangezogenen EP 1 640 192 A2 eine Anschlussgelenkanordnung bspw. für eine Luftfeder an einem Fahrzeugaufbau bekannt, die neben einem sog. Stiftgelenk, welches wie ein o.g. übliches Stützlager ausgebildet ist, ein Schwenklager vorgesehen ist. Um den möglichen Verschwenkweg dieses Schwenklagers zu begrenzen, ist in einem Ringspalt zwischen der Kolbenstange der Luftfeder und dem Fahrzeugaufbau, was in Übertragung auf die vorliegende Erfindung einem Ringspalt zwischen dem Federbein und dem Karosserieflansch entspricht, ein radial elastischer Ring eingelegt, der die Winkelbeweglichkeit des Stiftgelenks einschränkt. Weiterhin ist aus der DE 199 05 693 A1 ein Schwingungsdämpfer mit einem an einer Kolbenstange befestigten Kolben, einem Arbeitszylinder sowie oberen und unteren Befestigungsteilen bekannt, über die der Schwingungsdämpfer einerseits mit der Kolbenstange und andererseits mit dem Arbeitszylinder an entsprechenden benachbarten Bauteilen befestigbar ist. Dabei sind die Befestigungsteile über jeweils mindestens einen Gummiring an den besagten Bauteilen gehalten, wobei diese benachbarten Bauteile jeweils einen Zentrierring aufweisen, mit dem die Kolbenstange und/oder der Arbeitszylinder direkt oder indirekt gehalten wird.

Zurückkommend auf ein karrosserieflansch mit Stützlager nach dem Oberbegriff des Anspruchs 1 soll hiermit an diesem eine Verbesserung aufgezeigt werden, mit Hilfe derer dessen Funktionalität gesteigert wird, indem eine unterschiedliche Dämpfung in unterschiedlichen Richtungen im im Fahrzeug eingebauten Zustand erzielbar ist (= Aufgabe der vorliegenden Erfindung.

Die Lösung dieser Aufgabe ist dadurch gekennzeichnet, dass die Materialien der genannten Abschnitte (des Stützlagers) derart gewählt sind, dass das Stützlager bei einer Krafteinleitung in Richtung der Ebene des Karosserieflansches eine nennenswert steifere Charakteristik aufweist als bei Krafteinleitung in hierzu senkrechter Richtung, und dass der mittlere Abschnitt in der Horizontalebene betrachtet in Längsrichtung des Fahrzeugs eine andere Steifigkeit aufweist als in Fahrzeug-Querrichtung. Vorzugsweise sind dabei die Materialien des oberen und unteren Abschnitts des Stützlagers im Hinblick auf eine ausreichende Vertikaldämpfung ausgewählt, während das Material des mittleren Abschnitts im Hinblick auf eine ausreichende Querkraftabstützung ausgewählt ist.

Vorgeschlagen wird somit ein grundsätzlich bekanntes Stützlager, das aus unterschiedlichen Werkstoffen aufgebaut ist, wobei der sich durch geringere Dämpfung auszeichnende und somit aus einem härteren Material gebildete mittlere Abschnitt in der Ebene des Karosserieflansches liegt bzw. umgekehrt der Karosserieflansch im Bereich eines mittleren Abschnitts des Stützlagers liegt, der durch ein härteres Material gebildet wird. Selbstverständlich muss dieser mittlere Abschnitt nicht vollständig in der Ebene des Karosserieflansches liegen bzw. wird aufgrund seiner gegenüber diesem größeren Höhe nach oben und/oder nach unten über den Karosserieflansch hinausragen; wesentlich ist jedoch, dass sich dieser mittlere Abschnitt seitlich, d.h. in der Ebene des Karosserieflansches betrachtet an diesem abstützen kann, wobei diese Abstützung nicht in direktem Kontakt erfolgen muss, sondern ein weiteres Element zwischen dem mittleren Abschnitt und dem Karosserieflansch liegen kann, was einer indirekten Abstützung entspricht.

In einer vorteilhaften Ausführungsform kann der genannte mittlere Abschnitt des Stützlagers und/oder das gegen Endes des vorhergehenden Absatzes genannte weitere Element durch einen separaten vorzugsweise metallischen sog. Stützlagerflansch gebildet sein, der bspw. in einem späteren Montageschritt, d.h. nach erfolgter Stützlagermontage im bzw. am genannten Karosserieflansch geeignet montiert wird. Hiermit ergeben sich bessere bzw. andere oder weitere Möglichkeiten sowohl im Hinblick auf die Fixierung des Stützlagers (im sog. Haftmittel-Prozess), als auch im Bezug auf Service und Austausch.

Was den mittleren Abschnitt des Stützlagers betrifft, so ist dieser erfindungsgemäß derart gestaltet, dass sich in Längsrichtung und Querrichtung des Fahrzeugs unterschiedliche Steifigkeiten einstellen, so dass eine ideale Abstimmung hinsichtlich der Längsdynamik und Querdynamik des Fahrzeugs erfolgen kann. Hierfür kann der härtere oder steifere mittlere Abschnitt des Stützlagers geeignet geschlitzt ausgebildet sein; alternativ ist auch möglich, solche genannten unterschiedlichen Steifigkeiten in Längs- und Querrichtung des mittleren Abschnitts über unterschiedliche Wandstärken dieses Abschnitts zu realisieren, bspw. indem anstelle eines rotationssymmetrischen Querschnitts eine ovale Form oder andere Geometrien realisiert sind.

Weiterhin können, nachdem an einem erfindungsgemäßen Stützlager dessen mittlerer Abschnitt im wesentlichen die (radiale) Führung in der Horizontalebene des Fahrzeugs übernimmt, der oberere und/oder untere Abschnitt des Stützlagers mit Rippen oder ähnlichem versehen sein; was die Möglichkeiten zur Lagerabstimmung wesentlich erweitert, wobei diese Abschnitte vorteilhafterweise nicht gehaftet werden müssen, nämlich nicht mit einer bei Stützlagern üblichen und auch hier vorsehbaren zentralen Hülse, durch welche die Schraubverbindung zum axialen Verspannen der einzelnen Abschnitte hindurchgeführt ist, haftend verbunden werden müssen. Aufgrund der dadurch reduzierten bzw. reduzierbaren Kontaktfläche zwischen dem oberen bzw. unteren Abschnitt und der Hülse können unerwünschte sog. Stick-Slip-Effekte bzw. das Risiko damit verbundener Geräusche hierdurch verhindert bzw. zumindest verringert werden. Im übrigen kann zwischen den einander benachbarten Abschnitten eine materialschlüssige Klebverbindung oder dgl. hergestellt werden bzw. vorgesehen sein, womit sich vorteilhafterweise eine gute Dichtwirkung (insbesondere gegen Schmutz, Feuchtigkeit o.ä.) einstellt.

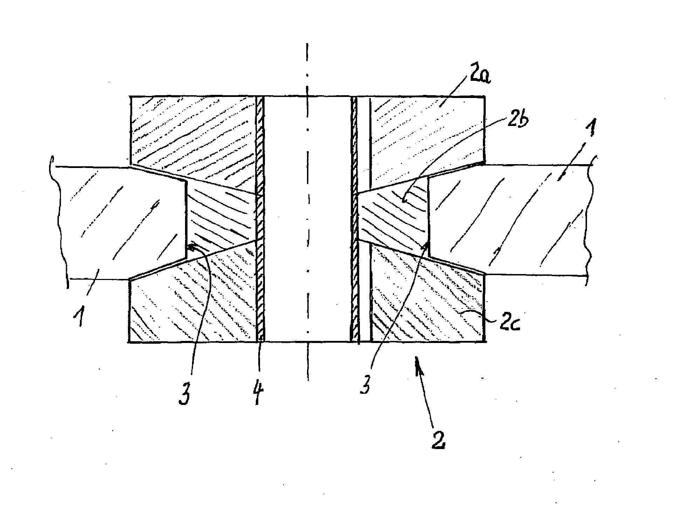

Eine stark vereinfachte Prinzipdarstellung zeigt die beigefügte einzige Figur in Form eines Schnittes, in der/dem mit der Bezugsziffer 1 der Karosserieflansch und mit der Bezugsziffer 2 das Stützlager bezeichnet ist, das lediglich auf das wesentliche beschränkt dargestellt ist. Demnach ist über eine nicht dargestellte lösbare Schraubverbindung, für die im Stützlager 2 eine Führungshülse 4 vorgesehen ist, in der Umgebung einer Aussparung 3 des Karosserieflansches ein oberer Abschnitt 2a des Stützlagers 2 von oben her und ein unterer Abschnitt 2c des Stützlagers von unten her gegen den Karosserieflansch 1 gepresst, wobei diese beiden Abschnitte 2a, 2c in einem Elastomermaterial ausgeführt sind. In der Ebene des Karosserieflansches 1 (jedoch nicht zwangsläufig auf dessen Höhe beschränkt) weist das Stützlager 2 zwischen seinem oberen Abschnitt 2a und seinem unteren Abschnitt 2c einen mittleren Abschnitt 2b auf, der durch seine Materialauswahl eine höhere Steifigkeit besitzt als die beiden angrenzenden Abschnitte 2a, 2c.

Vorzugsweise können der obere Abschnitt 2a und der untere Abschnitt 2c des Stützlagers 2 in einem (im Hinblick auf eine gute Vertikaldämpfung ausgelegten) PU-Werkstoff ausgeführt sein, während der mittlere Abschnitt 2b im Hinblick auf eine gute Querkraftabstützung beispielsweise in einer geeigneten Gummimischung ausgeführt sein kann. Alternativ könnte der mittlere Abschnitt 2b auch mit einem Fluid gefüllt sein oder aus einem geringfügig elastisch geformten, d.h. geeignete Schlitze oder dgl. aufweisend, Fest-Kunststoff bestehen.

Die einzelnen Abschnitte 2a, 2b, 2c des Stützlagers 2 können (in dieser Reihenfolge) aufeinander gelegt und insbesondere durch die besagte Schraubverbindung gegeneinander verspannt sein Zusätzlich können die einzelnen einander benachbarten Abschnitte haftend miteinander verbunden sein, bspw. über Materialschluss, eine Klebverbindung oder ähnliches, aber auch Formschluss oder reibschlüssig aufgrund der Verspannung.

Durch die Ausführung eines Stützlagers mit Abschnitten aus unterschiedlichen Werkstoffen (Materialien) ergeben sich mehrere Vorteile. So besteht die Möglichkeit einer praktisch unabhängigen Einstellung oder Abstimmung der Stützlagereigenschaften in Vertikalrichtung einerseits und Horizontalrichtung andererseits, wobei hier zusätzlich eine unterschiedliche Abstimmung in Längsrichtung und Querrichtung des Fahrzeugs (und somit in sämtlichen Raumrichtungen) erfolgen kann. Unter den Stützlagereigenschaften sind dabei insbesondere die Dämpfung und die Steifigkeit zu verstehen. Vorteilhafterweise kann ein vorgeschlagenes Stützlager aufgrund der unterschiedlichen Materialen und somit der Möglichkeit einer ideal angepassten Abstimmung kleiner bauend gestaltet werden, d.h. benötigt insbesondere weniger Bauraum als vollständig in Gummimaterial ausgeführte Stützlager, wobei im Vergleich mit vollständiger Gummi-Bauweise auch eine größere kardanische Weichheit erzielt werden kann. Vorteilhafterweise ist es bei einem erfindungsgemäßen Stützlager nicht nötig, den oberen Abschnitt 2a und/oder den unteren Abschnitt 2c mit der Hülse 4 zu verbinden bzw. an dieser anliegen zu lassen, was in der beigefügten Figur für die rechtsseitigen Teilbereiche dieser Abschnitte dargestellt ist, wobei dies sowie eine Vielzahl weiterer Details durchaus abweichend hiervon oder von obigen Erläuterungen gestaltet sein kann, ohne den Inhalt der Patentansprüche zu verlassen.

## Patentansprüche

1. Karosserieflansch (1) eines Fahrzeugs mit einem darin befestigten Federbeinstützlager (2) , indem ein oberer sowie ein unterer jeweils in einem Elastomermaterial ausgeführter Abschnitt (2a, 2c) von oben bzw. von unten mittels einer lösbaren Schraubverbindung in der Umgebung einer Aussparung (3) gegen den Karosserieflansch (1) gepresst werden und wobei ein zwischen dem oberen und dem unteren Abschnitt (2a, 2c) liegender mittlerer in einem anderen Material ausgeführter Abschnitt (2b) vorgesehen ist, der sich in der Aussparung (3) in Höhe des Karosserieflansches (1) liegend seitlich direkt oder indirekt an diesem abstützt,
**dadurch gekennzeichnet, dass** die Materialien der genannten Abschnitte (2a, 2b, 2c) derart gewählt sind, dass das Stützlager (2) bei einer Krafteinleitung in Richtung der Ebene des Karosserieflansches (1) eine nennenswert steifere Charakteristik aufweist als bei Krafteinleitung in hierzu senkrechter Richtung, und dass der mittlere Abschnitt (2b) in der Horizontalebene betrachtet in Längsrichtung des Fahrzeugs eine andere Steifigkeit aufweist als in Fahrzeug-Querrichtung.

2. Karosserieflansch mit Stützlager nach Anspruch 1,
**dadurch gekennzeichnet, dass** die unterschiedliche Steifigkeit in der Horizontalebene durch Schlitze in der Wand dieses Abschnitts (2b) oder durch über dem Umfang unterschiedliche Wandstärken realisiert ist.

3. Karosserieflansch mit Stützlager nach Anspruch 1 oder 2,
**dadurch gekennzeichnet, dass** die einzelnen Abschnitte (2a, 2b, 2c) aufeinander gelegt und gegeneinander verspannt sind und/oder dass einzelne Abschnitte aneinander gehaftet sind.

## Claims

1. A body flange (1) of a vehicle with a suspension strut support bearing (2) fastened therein, in that an upper and a lower portion (2a, 2c) in each case configured in an elastomeric material are pressed from above or below by means of a releasable screw connection in the surroundings of a recess (3) against the body flange (1) and wherein a central portion (2b) configured in a different material, located between the upper and the lower portion (2a, 2c), is provided, which, located in the recess (3) at the height of the body flange (1), is laterally supported directly or indirectly thereon, **characterised in that** the materials of said portions (2a, 2b, 2c) are selected in such a way that the support bearing (2), when a force is introduced in the direction of the plane of the body flange (1), has an appreciably more rigid characteristic than when a force is introduced in a direction perpendicular thereto, and **in that** the central portion (2b), viewed in the horizontal plane, in the longitudinal direction of the vehicle has a different rigidity than in the transverse direction of the vehicle.

2. A body flange with a support bearing according to claim 1, **characterised in that** the different rigidity in the horizontal plane is realised by slots in the wall of this portion (2b) or by different wall thicknesses over the periphery.

3. A body flange with a support bearing according to claim 1 or 2, **characterised in that** the individual portions (2a, 2b, 2c) are placed on one another and braced against one another and/or **in that** individual portions adhere to one another.

## Revendications

1. Bride de carrosserie (1) de véhicule comportant un palier d'appui de jambe de force à ressort (2) fixée dans celle-ci en ce qu'un segment supérieur ainsi qu'un segment inférieur (2a, 2c) réalisés, respectivement, en un élastomère, sont pressés par le dessus ou le dessous à l'aide d'une liaison vissée, amovible, dans l'environnement de l'ouverture (3) contre la bride de carrosserie (1), et
* un segment (2b), intermédiaire, situé entre le segment supérieur et le segment inférieur (2a, 2c), est réalisé en un autre matériau et s'appuie dans l'ouverture (3) au niveau de la bride de carrosserie (1), en position couchée, latéralement, directement ou indirectement contre l'ouverture,
**caractérisée en ce que**
- les matériaux des segments (2a, 2b, 2c) sont choisis pour que le palier d'appui (2), sous l'effet d'une force induite dans la direction du plan de la bride de carrosserie (1), présente une caractéristique significativement plus raide que pour une force induite dans une direction perpendiculaire, et
- le segment intermédiaire (2b), considéré dans le plan horizontal, présente dans la direction longitudinale du véhicule une autre raideur que dans la direction transversale du véhicule.

2. Bride de carrosserie comportant un palier d'appui selon la revendication 1,
**caractérisée en ce que**
la raideur différente dans le plan horizontal est réalisée par des fentes dans la paroi du segment (2b) ou par des épaisseurs de paroi différentes sur la périphérie.

3. Bride de carrosserie avec un palier d'appui selon la revendication 1 ou 2,
**caractérisée en ce que**
les différents segments (2a, 2b, 2c) sont disposés l'un sur l'autre et sont serrés l'un contre l'autre et/ou les différents segments sont attachés l'un à l'autre.
